# FASCICULE DE BREVET EUROPEEN

(11) **EP 2 697 055 B1**
(45) Date de publication et mention de la délivrance du brevet: **14.05.2014**
(21) Numéro de dépôt: 12713740.4
(22) Date de dépôt: 12.04.2012
(51) Int. Cl.: B32B 1/08, B32B 27/08, B32B 27/34, F16L 11/04, B32B 27/28

(54) **STRUCTURE MULTICOUCHE COMPRENANT UNE COUCHE D'UN COPOLYAMIDE PARTICULIER ET UNE COUCHE BARRIÈRE**
MEHRSCHICHTIGE STRUKTUR MIT EINER SCHICHT AUS EINEM SPEZIFISCHEN COPOLYAMID UND EINER BARRIERESCHICHT
MULTILAYER STRUCTURE INCLUDING A LAYER OF A SPECIFIC COPOLYAMIDE AND A BARRIER LAYER

(30) Priorité: 14.04.2011 FR 1101176
(43) Date de publication de la demande: 19.02.2014
(73) Titulaire: Arkema France, 92700 Colombes (FR)
(72) Inventeur: MONTANARI, Thibaut, F-27300 Menneval (FR); MONTEZIN, Fabrice, F-27230 Saint Aubin de Scellon (FR); VERMOGEN, Alexandre, F-27170 Beaumont Le Roger (FR); BLONDEL, Philippe, F-27300 Bernay (FR); BENET, Sylvain, F-27300 Bernay (FR)
(74) Mandataire: Lhoste, Catherine
(86) Numéro de dépôt international: PCT/EP2012/056711
(87) Numéro de publication internationale: WO 2012/140157

(56) Documents cités:
- EP-A1- 1 470 910
- EP-A1- 1 541 336
- EP-A1- 1 860 134
- WO-A1-2006/056581
- US-A1- 2005 136 205
- US-A1- 2009 252 979
- US-A1- 2009 269 532

## Description

L'invention se rapporte à une structure multicouche comprenant en tant que couche externe, une couche d'une composition comprenant majoritairement un ou plusieurs copolyamides semi-cristallins particuliers et en tant que couche interne, une couche barrière à base de polymères fluorés particuliers, ainsi que son utilisation pour le transfert et/ou le stockage de fluides, tels qu'une huile, un liquide à base de solution d'urée, un carburant, notamment un carburant alcoolisé, un liquide de refroidissement, un fluide réfrigérant ou encore des émanations de gaz moteur.

Dans le domaine des transports et de l'automobile en particulier, il existe de nombreux tuyaux, constitués de composition à base de polymères, destinés à véhiculer des fluides tels que, par exemple, des essences plus ou moins alcoolisées, du liquide de refroidissement (alcool et eau), du liquide de frein, des fluides réfrigérants présents dans le circuit de climatisation, de l'huile, des émanations de gaz moteur ou encore des solutions d'urée.

Pour des raisons de protection de l'environnement, les tuyaux et réservoirs doivent présenter une bonne propriété barrière à de tels fluides, afin d'en éviter leur perte par évaporation. Par propriété barrière, on entend le fait que le matériau de ces tuyaux et réservoirs est très peu perméable aux fluides, qu'il stocke ou transporte.

D'un autre côté, pour des raisons de sécurité, ces tuyaux et réservoirs doivent être très endurants mécaniquement et chimiquement, notamment pour résister au flùage, en cas de choc ou d'accident. Ils doivent aussi être suffisamment souples pour faciliter leur utilisation dans le véhicule, lors de leur installation notamment.

Des tubes et réservoirs constitués de structures multicouches, associant en tant que couche interne au moins une couche barrière, et en tant que couche externe, une couche de polymère endurant; sont généralement utilisés. Cette dernière couche peut notamment être constituée de polyamide aliphatique hautement carboné et souple, dont la fonction est, entre autres, d'assurer la résistance mécanique et chimique de l'ensemble de la structure multicouche.

Comme exemples de polyamides aliphatiques hautement carbonés et souples, on peut citer les compositions à base de polyamide 12 ou PA12, de PA11, de PA10.10, de PA10.12 ou de PA12.12.

Ces polyamides possèdent de nombreuses propriétés avantageuses. Ils sont résistants mécaniquement avec une bonne résistance au choc à froid et un allongement à la rupture élevé. Ils sont résistants chimiquement, notamment au chlorure de zinc et à l'hydrolyse. Ils reprennent peu d'humidité et sont stables en dimension. Ils sont résistants au vieillissement à haute température en présence d'oxygène (thermo-oxydation). Ils sont souples et, qui plus est, ils peuvent être facilement assouplis par ajout de plastifiant, s'il en était besoin.

Ces polyamides possèdent des températures de fusion, notées Tm, inférieures à environ 200°C (mesuré par DSC selon la norme ISO 11357).

D'autre part, les polymères barrières généralement utilisés pour constituer la couche imperméable sont des polymères fluorés comme le polyfluorure de vinylidène (PVDF) fonctionnalisé, des polyamides semi-aromatiques tels que le PA9.T, le PA10.T/6.T, le PAMXD.6 ou d'autres polymères tels que le copolymère d'éthylène et d'alcool vinylique (EVOH), le polysulfure de phénylène (PPS) ou le polyriaphtalate de butylène (PBN) fonctionnalisé.

Dans le domaine des transports et de l'automobile, on assiste aujourd'hui à une montée des températures sous le capot moteur. Les moteurs fonctionnent à des températures plus élevées et sont plus confinés. De plus, pour des raisons de gain de poids, il est envisagé de remplacer des canalisations en métal ou en caoutchouc, fonctionnant à haute température, par des canalisations en polymère. Les températures sous capot moteur augmentent au point de dépasser de plus en plus souvent la température de fusion (Tm) du polymère constituant la couche externe, et notamment de la couche de polyamide souple hautement carboné. Il est donc nécessaire de trouver une alternative aux canalisations en métal ou en caoutchouc, mais cette alternative doit conserver l'essentiel des qualités des polyamides aliphatiques hautement carbonés et souples généralement utilisés. Les qualités requises sont notamment la souplesse, la tenue chimique, la faible reprise en eau, le choc à froid, l'allongement à la rupture élevé, la tenue au vieillissement dans l'air et les fluides chauds, et enfin l'aptitude à être mis en oeuvre à des températures non excessivement élevées.

Les polyamides aliphatiques faiblement carbonés, tels que les PA6, PA6.6, PA4.6 sont bien connus. Ils présentent des températures de fusion Tm bien supérieures à celles des polyamides souples hautement carbonés, typiquement de 220°C à 300°C. Cependant, ils ne sont pas résistants chimiquement, en particulier au chlorure de zinc. Ils sont également très inférieurs en reprise en eau, en choc à froid et en vieillissement, même alliés à des polymères souples, tels que des modifiants-chocs. Ces polyamides aliphatiques faiblement carbonés ne sont donc pas une solution à ce problème.

Les polyamides semi-aromatiques, tels que les PA6.T/6.I, PA6.T/6.I/6.6, PA4.T/6.T/6.6 et PAMXD.6, présentent quant à eux des températures de fusion Tm bien supérieures, typiquement de 240°C à 340°C. Cependant, ils sont particulièrement rigides et leur allongement à la rupture est faible, même alliés à des polymères souples, tels que les modifiants chocs. Quant aux autres propriétés, elles sont également inférieures aux polyamides aliphatiques hautement carbonés. Ces polyamides ne peuvent présenter une alternative acceptable.

Plus récemment, sont apparus les polyamides semi-aromatiques hautement carbonés, tels que les PA9.T, PA9.T/9'.T (9' désignant un sous-motif issu de la 2-méthyl-1,8-nonanediamine, isomère de la nonanediamine), PA10.T/6.T et PA10.T. Ils possèdent des températures de fusion Tm bien supérieures aux polyamides aliphatiques hautement carbonés, typiquement de 260°C à 320°C. Ils sont performants en tenue chimique, en reprise en eau, mais restent très rigides. Il n'est pratiquement pas possible de les assouplir par incorporation de plastifiant. Un autre inconvénient est qu'ils nécessitent des températures de mise en oeuvre très élevées, typiquement vers 300-340°C. Dans le cadre de structures multicouches, cela fait remonter la température locale des autres polymères, ce qui peut entraîner la dégradation de ces derniers, si la température imposée se rapproche ou dépasse leur température de dégradation. Ces polyamides ne peuvent être une solution acceptable.

Le document EP 1 864 796 décrit l'utilisation de structure multicouche comportant au moins deux couches à base de polyamide semi-aromatique hautement carboné de type 9.T avec, dans la couche externe, une teneur en modifiant choc supérieure à celle de la couche interne. Cela permet de résoudre le problème de la résistance au choc insuffisante, mais cela ne règle pas le problème du faible allongement à la rupture, de la rigidité encore grande, de l'impossibilité d'assouplir la couche externe par la présence d'un plastifiant, de la tenue au vieillissement médiocre. Le problème posé n'est donc pas résolu.

On trouve, dans les documents EP 1 470 910, EP 1 245 657 et WO 2006/056581, la description de structures multicouches à base de polyamide et de polymère fluoré, mais dont les performances ne sont pas suffisantes (voir les structures 20, 21, 22 et 24 des exemples).

Le problème technique qui se pose consiste donc à fournir une structure multicouche présentant les caractéristiques cumulatives suivantes, à savoir une tenue à une température élevée d'au moins 200°C, de bonnes propriétés mécaniques (notamment flexibilité, allongement à la rupture, résistance aux chocs à basses températures) et chimiques (notamment résistance au ZnCl₂ et bonnes propriétés barrières au fluide stocké ou véhiculé), tout en présentant un très faible vieillissement de la structure dans le temps.

Afin de résoudre le problème posé, il a été découvert une structure multicouche particulière combinant, en tant que couche externe, une composition à base d'un copolyamide particulier défini par des proportions bien particulières en motifs semi-aromatiques et en motifs aliphatiques et, en tant que couche interne, une couche barrière à base de polymère fluoré particulier.

La présente invention vise donc à résoudre le problème technique posé par une structure multicouche comprenant :
- une couche (L1), dite externe, constituée d'une composition comprenant majoritairement un ou plusieurs copolyamides semi-cristallins (H) ayant une température de fusion d'au moins 220°C et comprenant au moins 80% en mol des deux motifs (s) et (a) suivants :
- le motif (s) désignant un ou plusieurs motifs semi-aromatiques (s) formés
   . d'un ou plusieurs sous-motifs issus de diacide aromatique (sr) et
   . d'un ou plusieurs sous-motifs issus de diamine aliphatique (sa), la diamine aliphatique (sa) comprenant de 9 à 13 atomes de carbone,
- le motif (a) désignant un ou plusieurs motifs aliphatiques comprenant de 8 à 13 atomes de carbone par atome d'azote,
le ratio molaire (s)/(a) allant de 1 à 3, et
- une couche (L2) constituée d'une composition comprenant majoritairement un ou plusieurs copolymères de tétrafluoroéthylène (TFE), ledit copolymère de TFE étant nécessairement fonctionnalisé, lorsque la couche (L2) est en contact avec la couche (L1) ou en contact avec une couche intermédiaire comprenant majoritairement un ou plusieurs polyamides.

L'invention porte également sur un tube comprenant la structure telle que définie ci-dessus.

L'invention porte enfin sur l'utilisation de ladite structure, notamment lorsqu'elle se présente sous la forme d'un tube, pour le transport de fluides polaires et/ou apolaires, notamment présents dans les véhicules.

D'autres objets, aspects, caractéristiques de l'invention apparaîtront à la lecture de la description suivante.

Dans la présente description, sauf indication expresse différente, tous les pourcentages (%) sont des pourcentages molaires.

D'autre part, tout intervalle de valeurs désigné par l'expression "entre a et b" représente le domaine de valeurs allant de plus de a à moins de b (c'est-à-dire bornes a et b exclues), tandis que tout intervalle de valeurs désigné par l'expression "de a à b" signifie le domaine de valeurs allant de a jusqu'à b (c'est-à-dire incluant les bornes strictes a et b).

Le symbole "//" sert à délimiter les couches d'une structure multicouche. Le symbole "/" sert à délimiter les motifs d'un copolymère.

Par motif au sens de la présente invention, on entend un enchaînement de structure polyamide issu de la polycondensation de lactame, d'aminoacide ou de diamine et diacide.

### Couche externe (L1)

La structure multicouche selon la présente invention comporte en tant que couche externe, une couche (L1) constituée d'une composition comprenant majoritairement un ou plusieurs copolyamides semi-cristallins (H).

Par majoritairement au sens de la présente invention, on entend que le ou les copolyamides semi-cristallins (H) sont présents dans la couche (L1) en une teneur supérieure à 50% en poids par rapport au poids total de la composition formant la couche (L1).

Selon un mode de réalisation préféré de l'invention, cette couche (L1) est destinée à être en contact avec l'air.

### Copolyamide semi-cristallin (H)

Par polymère semi-cristallin, au sens de la présente invention, on entend un polymère qui conserve un état solide au-delà de sa température de transition vitreuse (Tg).

La structure du copolyamide semi-cristallin (H) selon la présente invention est la suivante. Il comprend au moins 80% en mol des deux motifs (s) et (a) suivants :
- le motif (s) désignant un ou plusieurs motifs semi-aromatiques (s) formés
   . d'un ou plusieurs sous-motifs issus de diacide aromatique (sr) et
   . d'un ou plusieurs sous-motifs issus de diamine aliphatique (sa), la diamine aliphatique (sa) comprenant de 9 à 13 atomes de carbone,
- le motif (a) désignant un ou plusieurs motifs aliphatiques comprenant de 8 à 13 atomes de carbone par atome d'azote,
le ratio molaire (s)/(a) allant de 1 à 3.

De plus, le copolyamide semi-cristallin (H) présente une température de fusion (Tm) d'au moins 220°C.

### Motif semi-aromatique (S)

De manière générale, en chimie organique, un composé aliphatique est un composé carboné acyclique ou cyclique, saturé ou insaturé, à l'exclusion des composés aromatiques. Or, selon la présente invention, le terme aliphatique désigne un composé carboné acyclique, saturé ou insaturé, à l'exclusion des composés cycliques et des composés aromatiques. Ainsi, le terme aliphatique ne couvre que les composés carbonés linéaires ou ramifiés, saturés ou insaturés.

Le motif semi-aromatique (s) est formé d'un ou plusieurs sous-motifs issus de diacide aromatique (sr) et d'un ou plusieurs sous-motifs issus de diamine aliphatique (sa), la diamine aliphatique comprenant de 9 à 13 atomes de carbone.

Avantageusement, le sous-motif issu de la diamine aliphatique (sa) comprend de 10 à 13 atomes de carbone.

Le diacide aromatique peut être choisi parmi l'acide téréphtalique noté T, l'acide isophtalique noté I, l'acide naphtalénique et leurs mélanges.

La diamine aliphatique (notée en Ca, Ca désignant le nombre d'atomes de carbone de la diamine) peut être choisie parmi la nonanediamine (a=9), la 2-méthyl-1,8-nonanediamine (a=9'), la décanediamine (a=10), l'undécanediamine (a=11), la dodécanediamine (a=12) et la tridécanediamine (a=13).

Comme exemples de motifs semi-aromatiques (s) selon l'invention, on peut citer les motifs 9.T, 9'.T (où 9' provient de la 2-méthyl-1,8-nonanediamine), 10.T et leurs combinaisons telles que, par exemple, 9.T/9'.T. De préférence, le motif 10.T est utilisé.

Les motifs semi-aromatiques à base d'acide téréphtalique (T) sont particulièrement avantageux, car ils conduisent à des polyamides à fort taux de cristallinité et donnant des températures de fusion élevées. On choisira donc de préférence des polyamides semi-aromatiques riches en motif à base d'acide téréphtalique (T), conduisant à un fort taux de cristallinité et une température de fusion élevée. De préférence, le sous-motif (sr) n'est issu que de l'acide téréphtalique.

De préférence, la proportion de motifs semi-aromatiques (s) va de 40 à 75% en mol.

### Motif aliphatique (a)

Le motif aliphatique (a) comprend de 8 à 13 atomes de carbone par atome d'azote. Avantageusement, il comprend de 9 à 13 atomes de carbone par atome d'azote.

Dans le cas d'un motif de type X.Y, le nombre d'atomes de carbone par atome d'azote est la moyenne molaire du sous-motif X et du sous-motif Y.

Dans le cas des copolyamides, le nombre d'atomes de carbone par atome d'azote se calcule selon le même principe. Le calcul est réalisé au prorata molaire des différents motifs amides.

Ainsi, le choix des lactames, des aminoacides, des diamines et des diacides devra s'effectuer en fonction de cette gamme d'atomes de carbone par atome d'azote.

Lorsque le motif aliphatique (a) provient de la polycondensation d'un lactame, ce lactame peut être choisi parmi le caprylolactame, l'énantholactame, le pélargolactame, le décanolactame, l'undécanolactame et le laurolactame.

Lorsque le motif (a) provient de la polycondensation d'un aminoacide, il peut être choisi parmi l'acide 9-aminononanoïque, l'acide 10-aminodécanoïque, l'acide 12-aminododécanoïque et l'acide 11-aminoundécanoïque ainsi que ses dérivés, notamment l'acide N-heptyl-11-aminoundécanoïque.

Lorsque le motif (a) provient de la polycondensation d'une diamine (notée en Ca, Ca désignant le nombre d'atomes de carbone de la diamine) et d'un diacide en Cb (noté en Cb, Cb désignant le nombre d'atomes de carbone du diacide), la diamine aliphatique peut être choisie parmi la butanediamine (a=4), la pentanediamine (a=5), l'hexanediamine (a=6), l'heptanediamine (a=7), l'octanediamine (a=8), la nonanediamine (a=9), la 2-méthyl-1,8-nonanediamine (a=9'), la décanediamine (a=10), l'undécanediamine (a=11), la dodécanediamine (a=12), la tridécanediamine (a=13), la tétradécanediamine (a=14), l'hexadécanediamine (a=16), l'octadécanediamine (a=18), l'octadécènediamine (a=18), l'eicosanediamine (a=20), la docosanediamine (a=22) et les diamines obtenues à partir d'acides gras.

Avantageusement, la diamine Ca est choisie parmi l'octanediamine (a=8), la nonanediamine (a=9), la 2-méthyl-1,8-nonanediamine (a=9'), la décanediamine (a=10), l'undécanediamine (a=11), la dodécanediamine (a=12) et la tridécanediamine (a=13).

Le diacide aliphatique peut quant-à-lui être choisi parmi l'acide succinique (b=4), l'acide pentanedioïque (b=5), l'acide adipique (b=6), l'acide heptanedioïque (b=7), l'acide octanedioïque (b=8), l'acide azélaïque (b=9), l'acide sébacique (b=10), l'acide undécanedioïque (b=11), l'acide dodécanedioïque (b=12) et l'acide brassylique (b=13), l'acide tetradécanedioïque (b=14), l'acide hexadécanedioïque (b=16), l'acide octadécanoïque (b=18), l'acide octadécènoïque (b=18), l'acide eicosanedioïque (b=20), l'acide docosanedioïque (b=22) et les dimères d'acides gras contenant 36 carbones.

Avantageusement, le diacide Cb est choisi parmi l'acide octanedioïque (b=8), l'acide azélaïque (b=9), l'acide sébacique (b=10), l'acide undécanedioïque (b=11), l'acide dodécanedioïque (b=12) et l'acide brassylique (b=13).

Les dimères d'acides gras mentionnés ci-dessus sont des acides gras dimérisés obtenus par oligomérisation ou polymérisation d'acides gras monobasiques insaturés à longue chaîne hydrocarbonée (tels que l'acide linoléïque et l'acide oléïque), comme décrit notamment dans le document EP 0 471 566.

De préférence, la diamine est choisie parmi la nonanediamine (a=9), la 2-méthyl-1,8-nonanediamine (a=9'), la décanediamine (a=10), l'undécanediamine (a=11), la dodécanediamine (a=12) et la tridécanediamine (a=13), et le diacide est choisi parmi l'acide azélaïque (b=9), l'acide sébacique (b=10), l'acide undécanedioïque (b=11), l'acide dodécanedioïque (b=12) et l'acide brassylique (b=13).

De préférence, le motif aliphatique (a) est linéaire.

Le motif aliphatique (a) peut être choisi parmi les motifs 12, 11, 10.10, 10.12, 12.12, 6.14 et 6.12.

De préférence, les motifs 12, 10.10, 10.12 et 12.12 sont utilisés.

De préférence, la proportion de motifs aliphatiques (a) va de 20 à 50% en mol.

### Ratio (s)/(a)

Selon la présente invention, le ratio molaire (s)/(a) des motifs semi-aromatiques (s) sur les motifs aliphatiques (a) va de 1 à 3 et, de préférence, de 1,5 et 2,5.

### Température de fusion

Le copolyamide semi-cristallin (H) selon l'invention présente une température de fusion (Tm) d'au moins 220°C, dé préférence allant de 220 à 320°C, plus particulièrement de 220 à 280°C.

Il a été observé que, en deçà de 220°C, la cristallinité et la tenue à la traction ne sont pas acceptables.

La température de fusion est mesurée par DSC (Differential Scanning Calorimetry) conformément à la norme ISO 11357.

### Enthalpie de fusion

De préférence, l'enthalpie de fusion, mesurée par DSC conformément à la norme ISO 11357, du copolyamide semi-cristallin (H) selon l'invention est supérieure ou égale à 10 J/g, préférentiellement supérieure ou égale à 25J/g. Ainsi, le copolyamide est soumis à une première chauffe de 20°C/min jusqu'à une température de 340°C, puis à un refroidissement 20°C/min jusqu'à une température de 20°C, puis à une seconde chauffe de 20°C/min jusqu'à une température de 340°C, l'enthalpie de fusion étant mesurée lors de cette seconde chauffe.

Le copolyamide semi-cristallin (H) selon la présente invention comprend au moins 80% en mol et, de préférence, au moins 90% en mol, des deux motifs (s) et (a) tels que définis ci-dessus. Ainsi, il peut comprendre d'autres motifs de structure différente de celles des motifs (s) et (a).

### Autre motif

Ainsi, le copolyamide semi-cristallin (H) selon la présente invention peut comprendre de 0 à 20% d'un ou plusieurs motifs différents des motifs aliphatiques (a) et semi-aromatiques (s) précités. Les motifs suivants sont envisageables, sans toutefois être limitatifs.

Le copolyamide semi-cristallin (H) selon la présente invention peut comprendre un ou plusieurs motifs semi-aromatiques formés d'un sous-motif issu de diacide aromatique et d'un sous-motif issu de diamine, cette diamine ayant un nombre d'atomes de carbone allant de 4 à 8 ou bien supérieur ou égal à 14.

Le copolyamide semi-cristallin (H) selon la présente invention peut également comprendre un ou plusieurs motifs aliphatiques dont le nombre d'atomes de carbone par atome d'azote va de 4 à 7 ou bien est supérieur ou égal à 14.

Des motifs cycloaliphatiques provenant de la polycondensation de diamines et de diacides, dont l'un de ces deux composés est cycloaliphatique peuvent également être prévus.

Lorsque la diamine est cycloaliphatique, elle est choisie parmi la bis(3,5-dialkyl-4-aminocyclohexyl)méthane, la bis(3,5-dialkyl-4-amino-cyclohexyl)éthane, la bis(3,5-dialkyl-4-aminocyclo-hexyl)propane, la bis(3,5-dialkyl-4-aminocyclo-hexyl)butane, la bis-(3-méthyl-4-aminocyclo-hexyl)-méthane (BMACM ou MACM), la p-bis(aminocyclo-hexyl)méthane (PACM) et l'isopropylidènedi(cyclohexylamine) (PACP). Elle peut également comporter les squelettes carbonés suivants : norbornyl méthane, cyclohexylméthane, dicyclohexylpropane, di(méthylcyclohexyl) ou di(methylcyclohexyl) propane. Une liste non-exhaustive de ces diamines cycloaliphatiques est donnée dans la publication "Cycloaliphatic Amines" (Encyclopaedia of Chemical Technology, Kirk-Othmer, 4th Edition (1992), pp. 386-405).

Dans cette éventualité, le diacide peut être aliphatique, linéaire ou ramifié, tel que défini ci-dessus ou encore cycloaliphatique ou aromatique.

Lorsque le diacide est cycloaliphatique, il peut comporter les squelettes carbonés suivants : norbornyl méthane, cyclohexylméthane, dicyclohexylméthane, dicyclohexylpropane, di(méthylcyclohexyl) ou di(methylcyclohexyl)propane.

Dans cette éventualité, la diamine peut être aliphatique, linéaire ou ramifiée, telle que définie ci-dessus ou encore cycloaliphatique ou aromatique.

De préférence, le copolyamide (H) selon l'invention est constitué par les motifs suivants :
- de 40% à 75% en mol d'un ou plusieurs motifs semi-aromatiques (s),
- de 20% à 50% en mol d'un ou plusieurs motifs aliphatiques (a), et
- de 0 à 20% en mol d'un ou plusieurs motifs différents des motifs (a) et (s) précités.

De préférence, le copolyamide (H) selon l'invention ne comporte pas d'autres motifs que les motifs aliphatiques (a) et les motifs semi-aromatiques (s). Il est ainsi constitué de :
- de 50% à 75% en mol d'un ou plusieurs motifs semi-aromatiques (s),
- de 25% à 50% en mol d'un ou plusieurs motifs aliphatiques (a).

De préférence, le copolyamide semi-cristallin (H) est choisi parmi les PA12/9.T, PA6.12/10.T, PA10.10/10.T, PA10.10/10.T/6.T, PA10.10/10.T/10.I et PA10.12/10.T.

### Terminaison de chaîne amine

De préférence, le copolyamide semi-cristallin (H) selon l'invention présente une teneur en fins de chaîne amine supérieure ou égale à 40µeq/g. Cette teneur en fins de chaîne amine va avantageusement de 42µeq/g à 100µeq/g et, de préférence, de 45µeq/g à 70µeq/g.

La teneur en fin de chaîne des fonctions amine est mesurée de manière classique et connue de l'homme du métier, par potentiométrie.

La composition peut également être formée majoritairement d'un mélange de plusieurs copolyamides (H) susmentionnés.

Comme tout matériau polymère, la composition de la couche externe (L1) de la structure multicouche peut comprendre en outre un ou plusieurs polymères et/ou un ou plusieurs additifs.

Ainsi, la composition de la couche externe (L1) peut comprendre un ou plusieurs polymères supplémentaires. Ce ou ces polymères supplémentaires peuvent, par exemple, être choisis parmi des polyamides aliphatiques comprenant de préférence plus de 9 atomes de carbone par azote, des polyoléfines, fonctionnalisées ou non, et leur mélange.

Dans le cadre de modifiants-chocs, le polymère supplémentaire peut être une copolyoléfine fonctionnalisée comprenant une ou plusieurs fonctions anhydrides ou acides, éventuellement en mélange avec au moins un polymère comprenant une ou plusieurs fonctions époxydes.

Avantageusement, la composition formant la couche externe (L1) comprend au moins 18% en poids d'un ou plusieurs polymères supplémentaires tels qu'un ou plusieurs modifiants-chocs, dont l'un au moins est fonctionnalisé anhydride, le ou les modifiants-chocs étant préférentiellement de type copolyoléfine de Tg inférieure à -10°C et de module de flexion ISO178 inférieur à 100MPa.

De préférence, la composition formant la couche externe (L1) comprend au moins 30% en poids de plusieurs polymères supplémentaires par rapport au poids total de la composition, ces polymères supplémentaires formant une phase élastomère réticulée. Cette phase élastomère réticulée est composée d'au moins un modifiant-choc fonctionnalisé anhydride ou acide, d'au moins un polymère ou une molécule possédant plusieurs fonctions époxydes et, optionnellement, d'au moins un polymère ou une molécule possédant plusieurs fonctions acides, tous ces polymères étant préférentiellement de type copolyoléfine de Tg inférieure à -10°C et de module de flexion ISO178 inférieur à 100MPa.

La composition formant la couche externe (L1) peut également comprendre des additifs. Les additifs possibles sont, entre autres, les stabilisants, les colorants, les plastifiants, les charges, les fibres, les agents tensioactifs, les pigments, les azurants, les anti-oxydants, les cires naturelles et leurs mélanges.

Pour les plastifiants, une teneur allant jusqu'à 15% en poids du poids total de la composition peut être introduite.

### Couche barrière (L2)

Dans la structure selon l'invention, la couche barrière (L2) est une couche interne, voire la couche la plus interne, c'est-à-dire celle destinée, de préférence à être en contact avec les fluides.

Lorsque la structure comporte plus de deux couches, elle peut ainsi être une couche intermédiaire ou bien constituer la couche la plus interne. Il est également possible d'envisager d'avoir plusieurs couches barrières dans un souci de complémentarité ou de performance de la structure. La couche barrière comprend majoritairement un matériau barrière, c'est-à-dire un matériau beaucoup plus imperméable aux fluides que les polyamides aliphatiques hautement carbonés classiquement utilisés en couche externe. Les fluides utilisés sont notamment des essences, des alcools, des liquides de refroidissement, des fluides réfrigérants ou encore des solutions d'urée. On peut classer les matériaux en fonction de leur perméabilité à l'essence alcoolisée type CE10 (45% isooctane + 45% toluène + 10% éthanol) à 60°C. On peut, par exemple, considérer qu'un matériau est apte à constituer une couche barrière, s'il est au moins 5 fois moins perméable que le PA-12.

La couche barrière (L2) présente dans la structure selon l'invention est constituée d'une composition comprenant majoritairement un ou plusieurs copolymères de tétrafluoroéthylène (TFE), le copolymère de TFE étant nécessairement fonctionnalisé lorsque la couche (L2) est en contact avec la couche (L1) ou en contact avec une couche intermédiaire comprenant majoritairement un ou plusieurs polyamides. Par majoritairement au sens de la présente invention, on entend que le ou les polyamides sont présents dans la couche intermédiaire en une teneur supérieure à 50% en poids par rapport au poids total de la composition formant cette couche intermédiaire.

Le copolymère de TFE est avantageusement un copolymère dans lequel la proportion molaire du motif TFE est majoritaire par rapport à celle du ou des autres motifs formant ledit copolymère. Ces autres motifs peuvent notamment être issus de l'éthylène, du chlorotrifluoroéthylène, de l'hexafluoropropylène ou d'un perfluoroalkylvinyléther, comme le perfluoropropylvinylether.

Le copolymère de TFE est avantageusement choisi parmi le copolymère d'éthylène et de tétrafluoroéthylène (ETFE), le copolymère de tétrafluoroéthylène et de chlorotrifluoroéthylène (CTFE) et leur mélange. Lorsqu'il est fonctionnalisé, ce copolymère de TFE comprend une ou plusieurs fonctions anhydrides, époxys, acides ou encore halogénures d'acide.

Lorsque la couche (L2) est en contact avec la couche (L1) ou en contact avec une couche intermédiaire comprenant majoritairement un ou plusieurs polyamides, le copolymère de tétrafluoroéthylène est nécessairement fonctionnalisé. Comme indiqué ci-dessus, il peut être fonctionnalisé par des fonctions anhydrides, époxys, acides ou encore halogénures d'acide. Les fonctions portées par le copolymère de TFE vont réagir avec le (co)polyamide de la couche adjacente, c'est-à-dire avec le (co)polyamide en contact direct avec le copolymère de TFE de la couche (L2), et notamment avec les fonctions amines du (co)polyamide, assurant ainsi l'adhésion de ces deux couches, l'une avec l'autre.

De tels copolymères de TFE sont notamment disponibles sous la dénomination commerciale Neoflon^{®} EP7000 de la société Daikin ou bien Fluon^{®} AH2000 de la société Asahi.

La composition peut également être constituée d'un mélange de plusieurs copolymères de TFE.

Moins directement exposée à la chaleur de l'environnement moteur que la couche externe (L1), la couche barrière (L2) peut présenter une température de fusion inférieure à 220°C, car la ou les couches supérieures servent de bouclier thermique à la ou aux couches sous-jacentes. Toutefois, la composition de la couche barrière sera avantageusement choisie avec une température de fusion Tm supérieure à 220°C, et encore plus avantageusement choisie avec une Tm allant de 220°C à 280°C.

Comme tout matériau polymère, la composition de la couche barrière (L2) de la structure peut comporter en outre un ou plusieurs autres polymères et/ou un ou plusieurs additifs. Elle est cependant majoritairement constituée du ou des copolymères barrières de TFE susmentionnés.

Les polymères supplémentaires envisageables peuvent notamment être choisis parmi les polymères supplémentaires déjà cités ci-dessus comme susceptibles d'entrer dans la composition de la couche externe (L1).

Les additifs possibles sont, entre autres, les stabilisants, les colorants, les plastifiants, les charges, les nanocharges et notamment celles à caractère renforçant la barrière telles les nanoargiles.

De manière avantageuse, la couche (L2) comporte des charges conductrices, telles que le noir de carbone pour le rendre antistatique.

### Structure multicouche

La couche externe (L1) en copolyamide semi-cristallin (H) selon l'invention et la couche barrière (L2) peuvent être, par exemple, simplement combinées en un tube bicouche de la nature suivante, avec de l'extérieur vers l'intérieur :
couche (L1) en copolyamide (H) // couche (L2) barrière fonctionnalisée

La structure peut également comprendre plusieurs couches de nature différente et complémentaire.

Ainsi, selon un deuxième mode de réalisation, la structure peut être une structure tricouche comprenant une couche intermédiaire (L3) disposée entre les couches (L1) et (L2). Une telle structure multicouche peut comporter de l'extérieur vers l'intérieur les couches suivantes :
couche (L1) // couche (L3) // couche (L2) barrière fonctionnalisée

La couche intermédiaire (L3) peut par exemple comprendre un ou plusieurs polyamides aliphatiques hautement carbonés (c'est-à-dire un ou plusieurs (co)polyamides aliphatiques comprenant de 9 à 36 atomes de carbone par atome d'azote (par exemple en PA11).

La couche intermédiaire (L3) peut également être une couche présentant également des propriétés barrières, par exemple une couche comprenant un ou plusieurs polyphtalamides.

Selon un troisième mode de réalisation, lorsque la couche (L2) est constituée majoritairement d'un ou de plusieurs polymères de TFE tels que définis ci-dessus et fonctionnalisés, la structure peut comprendre une couche supplémentaire se situant en contact avec ladite couche (L2) et formant la couche la plus interne de la structure, cette couche supplémentaire peut être une couche barrière.

La structure multicouche peut comporter de l'extérieur vers l'intérieur les couches suivantes :
couche (L1) en copolyamide (H) // couche (L2) barrière fonctionnalisée // couche barrière, éventuellement conductrice

En particulier, cette couche supplémentaire peut être une couche barrière et comprendre un ou plusieurs polymères fluorés tels que définis ci-dessus et non fonctionnalisés et, éventuellement des charges conductrices.

La structure multicouche peut alors comporter de l'extérieur vers l'intérieur les couches suivantes :
couche (L1) en copolyamide (H) // couche (L2) barrière fonctionnalisée // couche barrière non fonctionnalisée (L2), éventuellement conductrice

Selon un quatrième mode de réalisation, des structures multicouches symétriques peuvent être réalisées comme, par exemple, une structure tricouche, avec de l'extérieur vers l'intérieur :
couche (L1) en copolyamide (H) // couche (L2) barrière fonctionnalisée // couche (L1) en copolyamide (H)

Selon un cinquième mode de réalisation, des couches avec de nouvelles fonctions peuvent être réalisées telles que, par exemple, avec de l'extérieur vers l'intérieur :
couche (L1) en copolyamide (H) // couche (L2) barrière fonctionnalisée // couche en PA aliphatique conducteur.

Le PA aliphatique constitue la couche interne, là où la température est moins élevée qu'en externe, face à l'environnement du moteur.

Dans toutes les structures multicouches décrites ci-dessus, on peut avantageusement ajouter des charges conductrices dans la composition de la couche la plus interne afin de dissiper d'éventuelles charges électrostatiques, notamment lorsque cette couche la plus interne est formée du copolymère de TFE.

Un aspect important pour la réalisation de telles structures multicouches est l'adhésion des couches entre elles.

Une manière d'obtenir une bonne adhésion est d'utiliser un polymère fonctionnalisé par une fonction réactive vis-à-vis d'un des bouts de chaînes du copolyamide (H) de la couche endurante (L1).

C'est par exemple le cas de l'ETFE Fluon AH2000 de la société Asahi qui est un polymère barrière possédant une fonctionnalisation anhydride. L'anhydride réagit avec les bouts de chaîne amine du copolyamide (H). Il conviendra alors de choisir un polyamide, notamment un copolyamide (H), suffisamment riche en bouts de chaîne amine NH₂ pour avoir une bonne adhésion, typiquement avec une teneur en bouts de chaîne amine supérieure à 40µeq/g, comme indiqué ci-dessus.

Une autre manière d'obtenir une bonne adhésion entre la couche en copolyamide (H) constituant la couche endurante (L1) et la couche en polymère barrière (L2) est de placer, entre elles, une couche intermédiaire de liant. Le liant peut être un mélange des compositions de ces deux couches, avantageusement accompagné d'une certaine quantité de compatibilisant (se reporter par exemple aux documents EP 1 162 061 et EP 2 098 580).

### Préparation des compositions

Les copolyamides (H) selon l'invention sont synthétisés par les techniques usuelles de polymérisation, en particulier par polycondensation.

Les compositions comprenant les copolyamides (H) sont fabriquées par les techniques usuelles de compoundage, en particulier sur extrudeuse bivis à l'état fondu.

Les structures multicouches sont typiquement fabriquées par co-extrusion de chaque couche à l'état fondu. Le tube multicouche est particulièrement représentatif d'une structure multicouche.

D'une manière générale, la réalisation d'un tube multicouche nécessite l'utilisation de plusieurs extrudeuses régulées en température, choisies et réglées pour qu'elles soient compatibles avec la structure à réaliser. Ces extrudeuses convergent sur une boîte de répartition et d'assemblage des flux que l'on appelle une tête de co-extrusion, régulée en température. Le rôle de la tête de co-extrusion est d'empiler les polymères fondus venus de chacune des extrudeuses en optimisant leur parcours pour que le profil de vitesse soit le plus homogène possible en sortie d'outillage. L'homogénéité des profils de vitesse est nécessaire à la régularité des profils d'épaisseurs de chacune des couches. Cet assemblage de couches se fait par voie fondue. Une fois assemblées, les couches circulent toujours à l'état fondu à travers un jeu d'outillage (poinçon/filière) avant d'être étirées à chaud à l'air libre, puis calibrées à l'aide d'un conformateur. La calibration est simultanée au refroidissement, puisque le conformateur est plongé dans un bac à eau (5 < T° < 80°C) ou aspergé d'eau à l'aide de busettes. La calibration se fait le plus souvent sous vide (20 - 500 mbar), afin d'assurer la rotondité du tube et mieux maîtriser ses caractéristiques dimensionnelles. Le refroidissement du tube se poursuit le long d'une série de bacs à eau. Le tube est tiré par un ensemble mécanique de tirage qui impose la vitesse de tirage à la ligne (typiquement 10 à 80 m/min). Des systèmes périphériques peuvent être associés pour répondre à des besoins spécifiques (contrôle d'épaisseurs en ligne ou de diamètre, flammage....). L'homme du métier sait régler les paramètres des extrudeuses et de l'ensemble de la ligne pour associer qualité du tube (diamètre, répartition d'épaisseurs, propriétés mécaniques ou optiques...) et exigences de productivité (stabilité des paramètres d'extrusion dans le temps, débits visés...).

Le tube multicouche peut être optionnellement annelé, selon les besoins de l'application, exigeant plus ou moins de souplesse ou imposant plus ou moins des contraintes géométriques. L'annelage se fait à l'aide d'un outillage poinçon/filière monté en aval de la tête de coextrusion, puis via l'utilisation d'un banc d'annelage qui permet de conformer le tube chaud à l'intérieur de moules spécifiques.

De telles structures multicouches, se présentant notamment sous forme de tubes multicouches, peuvent également être réalisées en plusieurs étapes, c'est-à-dire qu'une couche extérieure peut être ajoutée au cours d'une deuxième étape de reprise, par recouvrement, via l'utilisation d'une tête d'équerre supplémentaire.

On ne sortirait pas du cadre de l'invention en ajoutant à une structure multicouche telle que décrite ci-dessus, dans une deuxième étape de reprise, une couche supplémentaire disposée au-dessus de la couche externe (L1), par exemple une couche d'élastomère dans le but d'offrir une protection supplémentaire, par exemple aux frottements ou pour minimiser d'éventuels problèmes de bruits.

On ne sortirait pas non plus du cadre de l'invention en ajoutant une tresse à l'intérieur de la structure multicouche, par exemple afin d'augmenter la résistance à l'éclatement sous pression.

L'invention a également pour objet un tube comprenant une structure telle que définie ci-dessus.

L'invention porte enfin sur une utilisation de la structure selon l'invention, notamment sous forme de tube, pour le transport ou le transfert de fluides polaires et/ou apolaires, notamment présents dans les véhicules.

Le fluide peut être choisi parmi une huile, un lubrifiant, un liquide à base de solution d'urée, de l'ammoniac, de l'ammoniaque, du pétrole et ses composés, un carburant, notamment un carburant alcoolisé et particulièrement une bio-essence, un fluide hydraulique, un fluide réfrigérant ou frigorigène (tel que du CO₂ ou un fluide fluorocarboné comme le 1,1,1,2-tétrafluoroéthane ou encore le 2,3,3,3-tétrafluoropropène), un liquide de refroidissement, en particulier un liquide de refroidissement à base de glycol, mais également de l'air, des émanations de gaz moteur, telles que des gaz de carter ou des gaz de combustion.

La structure multicouche selon l'invention peut avantageusement être utilisée pour la réalisation de tout ou partie d'éléments d'équipements industriels pour le stockage, le transport ou le transfert de fluides tels que ceux listés ci-dessus. De tels fluides peuvent être chauds ou froids. De tels équipements peuvent être destinés à une utilisation dans le domaine de l'industrie en général (par exemple, pour des lignes pneumatiques, hydrauliques, de nettoyage vapeur) ainsi que dans le domaine de l'exploitation des gisements de pétrole et de gaz sous la mer (domaine de l'Off Shore).

Plus particulièrement, et notamment dans le domaine du transport (automobile, camions,...), la structure multicouche selon l'invention, par exemple lorsqu'elle se présente sous la forme de tubes, peut en particulier être utilisée :
- dans un dispositif de circulation de gaz, en pression ou en dépression, tel qu'un dispositif d'admission d'air ou de ventilation de gaz moteurs ou un dispositif d'assistance au freinage,
- dans un dispositif de circulation d'huile ou de lubrifiant, tel qu'un dispositif de refroidissement d'huile, un dispositif hydraulique ou un dispositif de freinage,
- dans un dispositif de circulation de liquide, aqueux ou non, tel qu'un dispositif de refroidissement du moteur ou un dispositif de réduction catalytique sélective,
- dans un dispositif de circulation de fluide réfrigérant ou frigorigène, tel qu'un circuit de climatisation,
- dans un dispositif de stockage, de transport ou de transfert (ou circulation) de fluides, en particulier de carburants.

Les exemples suivants servent à illustrer l'invention sans toutefois présenter un caractère limitatif.

### 1/ Composants

### Copolyamides (H) selon l'invention

Ces copolyamides sont fabriqués par les techniques usuelles de polycondensation. On en trouvera une illustration dans le brevet US 6 989 198, pages 18 et 19. Le symbole T désigne l'acide téréphtalique, I désigne l'acide isophtalique.

Le copolyamide (A) est un PA10.10/10.T comportant 41% mol de motifs 10.10 et ayant une viscosité inhérente de 1.21, une teneur en groupes terminaux NH₂ de 55µeq/g, une température de fusion Tm de 260°C et une enthalpie de fusion de 29 J/g.

Le copolyamide (Ab) est un PA10.10/10.T comportant 33% mol de motifs 10.10 et ayant une viscosité inhérente de 1.19, une teneur en groupes terminaux NH₂ de 58µeq/g, une température de fusion Tm de 279°C et une enthalpie de fusion de 38 J/g.

Le copolyamide (Ac) est un PA10.10/10.T comportant 23% mol de motifs 10.10 et ayant une viscosité inhérente de 1.12, une teneur en groupes terminaux NH₂ de 59µeq/g, une température de fusion Tm de 298°C et une enthalpie de fusion de 38 J/g.

Le copolyamide (D) est un PA12/9.T comportant 41% mol de motifs 12 et ayant une viscosité inhérente de 1.28, une teneur en groupes terminaux NH₂ de 49µeq/g, une température de fusion Tm de 266°C et une enthalpie de fusion de 30 J/g.

Le copolyamide (E) est un PA10.10/10.T/6.T comportant 25% mol de motifs 10.10, 55% mol de motifs 10.T et ayant une viscosité inhérente de 1.09, une teneur en groupes terminaux NH₂ de 62µeq/g, une température de fusion Tm de 283°C et une enthalpie de fusion de 33 J/g.

Le copolyamide (F) est un PA10.10/10.T/10.I comportant 25% mol de motifs 10.10, 55% mol de motifs 10.T et ayant une viscosité inhérente de 1.12, une teneur en groupes terminaux NH₂ de 59µeq/g, une température de fusion Tm de 274°C et une enthalpie de fusion de 29 J/g.

### Autres composants

Le copolyamide (M) est un PA9.T/9'.T comportant 50% mol de motifs 9'.T et ayant une viscosité inhérente de 1.15, une température de fusion Tm de 264°C et une enthalpie de fusion de 30 J/g.

Le copolyamide (P) est un PA6.T/6.I/6.6 comportant 50% mol de motifs 6.T, 40% mol de motifs 6.I et 10% mol de motifs 6.6, ayant une viscosité inhérente de 1.08, une température de fusion Tm de 267°C et une enthalpie de fusion de 30 J/g.

Le copolyamide (Q) est un PA6.T/6.I/6.6 comportant 55% mol de motifs 6.T, 20% mol de motifs 6.I et 25% mol de motifs 6.6, ayant une viscosité inhérente de 1.01, une température de fusion Tm de 301°C et une enthalpie de fusion de 24 J/g.

Le modifiant-choc (L) désigne un copolymère d'éthylène, d'acrylate de butyle et d'anhydride maléique PE/BA/MAH ayant une teneur pondérale en BA de 30%, en MAH de 1.5% et un MFI de 1 à 235°C sous 5 kg.

Le modifiant-choc (X) désigne un copolymère d'éthylène, d'acrylate de méthyle et de méthacrylate de glycidyle PE/MA/GMA ayant une teneur pondérale en MA de 30%, en GMA de 5% et un MFI de 3 à 235°C sous 5 kg.

Le modifiant-choc (EPRm) désigne un élastomère éthylène-propylène fonctionnalisé par un groupe réactif anhydride (à 0,5-1% en masse) ayant un MFI 9 à 230°C, sous 10kg, de type Exxelor VA1801, de la société Exxon.

Le modifiant-choc (mPE) désigne un copolymère d'éthylène et d'octène fonctionnalisé par un groupe réactif anhydride (à 0.5-1% en masse) ayant un MFI 1.4 à 190°C, sous 2.16kg, de type Fusabond MN493D, de la société Dupont.

(StabCu) désigne un mélange de stabilisants minéraux à base d'iodure de cuivre et de potassium de type Iodide P201 de la société Ciba.

(Stab1) désigne un mélange de stabilisants organiques constitué de 80% de phénol Lowinox 44B25 de la société Great Lakes et de 20% de phosphite Irgafos 168 de la société Ciba.

(BBSA) désigne le plastifiant butyl-benzyl-sulfonamide.

Le polyamide (PA10.10) désigne un homopolyamide PA10.10 de viscosité inhérente 1.65.

Le polyamide (PA12a) désigne un polyamide PA12 de viscosité inhérente 1.3 et ayant une teneur en groupes terminaux NH₂ de 70µeq/g.

Le polyamide (PA12b) désigne un polyamide PA12 de viscosité inhérente 1.6 et ayant une teneur en groupes terminaux NH2 de 45 µeq/g.

Le polyamide (PA6) désigne un polyamide PA6 de viscosité inhérente 1.55 et ayant une teneur en groupes terminaux NH₂ de 53µeq/g.

La viscosité inhérente (parfois abrégée visco inh) est mesurée à l'aide d'un viscosimètre UBBELHODE à 25°C dans le métacrésol pour 0,5g de polymère dans 100ml de métacrésol. Ce principe est décrit dans ULLMANN'S Encyclopedia of Industrial Chemistry - Vol. A 20, p. 527 - 528 (1995 - 5e édition).

La teneur en groupes terminaux NH₂ est mesurée par potentiométrie.

### 2/ Compositions

Des compositions de copolyamides sont fabriquées par compoundage sur extrudeuse bivis à l'état fondu. Nous utilisons une bivis Werner 40, avec une vitesse de vis de 300tours/minutes, un débit de 70kg/h, une température de 300°C pour les compositions dont les ingrédients ont un point de fusion inférieur à 285°C ou une température de 320°C pour ceux dont les ingrédients ont un point de fusion allant de 285°C à 310°C.

(A1) désigne une composition comprenant 20% de modifiant-choc (L), 10% de modifiant-choc (X), 0.5% de (StabCu), le complément à 100% étant le copolyamide (A).

(A2) désigne une composition comprenant 20% de modifiant-choc (L), 10% de modifiant-choc (X), 5% de plastifiant (BBSA), 0.5% de (StabCu), le complément à 100% étant le copolyamide (A).

(A3) désigne une composition comprenant 12% de modifiant-choc (L), 0.5% de (StabCu), le complément à 100% étant le copolyamide (A).

(A4) désigne une composition comprenant 20% de modifiant-choc (EPRm), 0.5% de (StabCu) le complément à 100% étant le copolyamide (A).

(A5) désigne une composition comprenant 30% de modifiant-choc (mPE), 0.5% de (StabCu), le complément à 100% étant le copolyamide (A).

(Ab1) désigne une composition identique à la composition (A1) sauf que le copolyamide est le copolyamide (Ab).

(Ac1 désigne une composition identique à la composition (A1) sauf que le copolyamide est le copolyamide (Ac).

(Ac10) désigne une composition comprenant 20% de modifiant-choc (L), 10% de modifiant-choc (X), 15% de (PA10.10), 0.5% de (StabCu), le complément à 100% étant le copolyamide (Ac).

(D1) désigne une composition comprenant 20% de modifiant-choc (L), 10% de modifiant-choc (X), 0.5% de (StabCu), le complément à 100% étant le copolyamide (D).

(E1) désigne une composition comprenant 20% de modifiant-choc (L), 10% de modifiant-choc (X), 0.5% de (StabCu), le complément à 100% étant le copolyamide (E).

(F1) désigne une composition comprenant 20% de modifiant-choc (L), 10% de modifiant-choc (X), 0.5% de (StabCu), le complément à 100% étant le copolyamide (F).

(M1) désigne une composition comprenant 15% de modifiant-choc (EPRm), 1% de (Stab1) le complément à 100% étant le copolyamide (M).

(P1) désigne une composition comprenant 15% de modifiant choc (EPRm), 1% de (Stab1), le complément à 100% étant le copolyamide (P).

(Q1) désigne une composition comprenant 20% de modifiant-choc (L), 10% de modifiant-choc (X), 0.5% de (StabCu), le complément à 100% étant le copolyamide (Q).

(PA12h) désigne une composition comprenant 20% de modifiant-choc (L), 10% de modifiant-choc (X), 0.5% de (StabCu), le complément à 100% étant le (PA12a).

(PA12hip) désigne une composition comprenant 6% de modifiant-choc (EPRm), 6% de (BBSA), 1% de (Stab1), le complément à 100% étant le (PA12b).

(PA6hip) désigne une composition comprenant 6% de modifiant-choc (EPRm), 12% de (BBSA), 1% de (Stab1), le complément à 100% étant le (PA6).

### Compositions des couches barrières (L2) selon l'invention

Les compositions suivantes sont des produits commerciaux.

(ETFE-1) est un ETFE (désignant un copolymère d'éthylène (E) et de tetrafluoroéthylène (TFE)) fonctionnalisé, du nom de Neoflon EP7000 et produit par la société Daikin. Il est fonctionnalisé par des groupes réactifs qui réagiront avec les bouts de chaîne des polyamides. Un tel produit est décrit dans le document US 6 740 375.

(ETFE-2) est un ETFE fonctionnalisé à l'anhydride du nom de Fluon^{®} AH2000 et produit par la société Asahi. Il est fonctionnalisé par des groupes réactifs anhydride qui réagiront avec les bouts de chaîne des polyamides. Un tel produit est décrit dans le document US 6 740 375.

(Fluoré-3) est un copolymère de TFE fonctionnalisé du nom de Neoflon^{®} CPT LP-1030 et produit par la société Daikin. Il est fonctionnalisé par des groupes réactifs qui réagiront avec les bouts de chaîne des polyamides. Ce copolymère de TFE est composé majoritairement de TFE et également de CTFE (chlorotrifluoroéthylène) et de PPVE (perfluoropropylvinylether). De tels produits sont décrits dans le document EP 2 264 086.

(ETFE-cond) est une composition d'ETFE chargée noir de carbone du nom de Neoflon ET610AS et produit par la société Daikin. Le noir de carbone confère à cette composition des propriétés antistatiques.

### Compositions des couches barrières comparatives

(PVDF-1) est un PVDF (polyfluorure de vinylidène) fonctionnalisé par 0.5% d'anhydride maléïque et de MFI de 2 à 230°C sous 5kg.

### 3/ Structures multicouches

Les structures multicouches préparées sont des tubes multicouches de 8mm de diamètre et de 1mm d'épaisseur réalisés par coextrusion. Cela nécessite l'utilisation de plusieurs extrudeuses régulées en température, choisies et réglées pour qu'elles soient compatibles avec la structure à réaliser. Il s'agit notamment de régler en température une extrudeuse de façon à être suffisamment au-dessus de la température de fusion du polymère de la composition. On se reportera à ce qui a été décrit ci-dessus pour ce qui concerne la coextrusion.

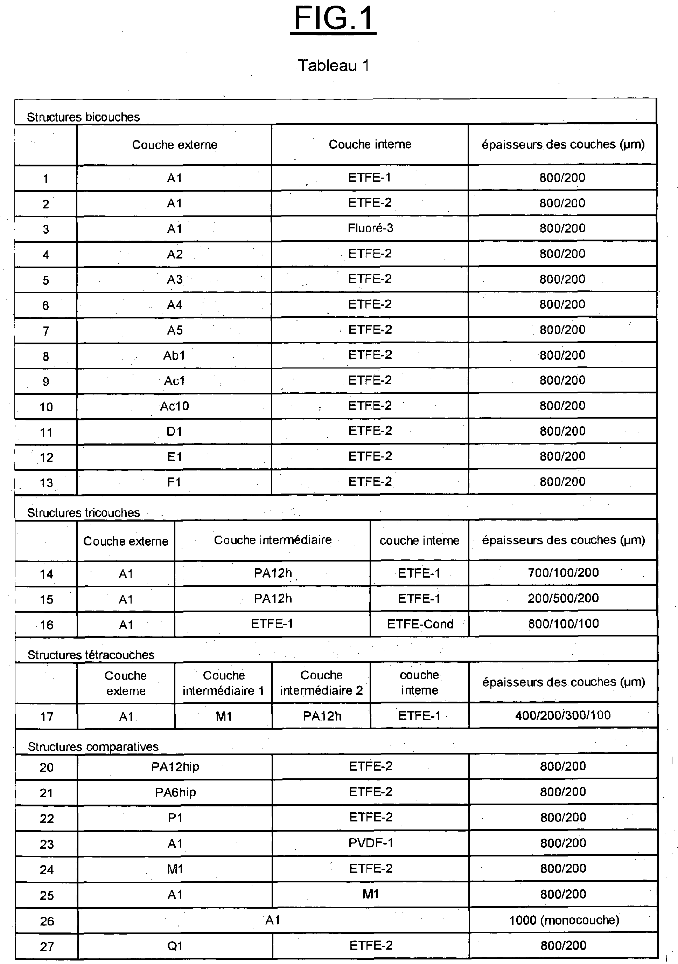

Nous réalisons les structures figurant en tableau 1 (voir figure 1).

### 4/ Evaluation des structures multicouches

Ces structures sont ensuite évaluées selon différents critères décrits ci-dessous.

### Tenue thermomécanique à 200°C (en abrégé : Tenue à 200°C)

Ce test nous permet d'estimer la température de service.

Le tube est placé 30minutes dans une étuve à 200°C. On observe ensuite son état :
* "Passe" signifie que le tube a conservé son intégrité physique, qu'il ne s'est pas significativement déformé et qu'il n'a pas fondu.
* "Fondu" signifie que le tube s'est significativement déformé et qu'il a, au moins en partie, fondu.

### Flexibilité

C'est le module de flexion mesuré selon la norme ISO178, après un conditionnement de 15 jours à 23°C et sous 50% d'humidité relative.

Les critères d'appréciation sont les suivants :
- B = bien si < 900MPa
- AB = acceptable entre 900 et 1500 MPa
- Mv = mauvais si > 1500 MPa.

### Allongement à la rupture (en abrégé : Allongement)

Il correspond à l'allongement à la rupture selon la norme ISO527, après un conditionnement de 15 jours à 23°C et sous 50% d'humidité relative.

Les critères d'appréciation sont les suivants.
- bien si > 100%
- mauvais si < 50%

### Résistance au chlorure de zinc (en abrégé : ZnCl₂)

Cette résistance est testée sur les parties exposées aux agressions des sels de la route, c'est à dire au niveau de la face externe du tube et du côté raccord qui correspondant à l'endroit où le tube est coupé.

La mesure de la résistance au chlorure de zinc est effectuée selon la norme SAE J2260. Les tubes, préalablement cintrés avec un rayon de courbure de 40mm, sont immergés dans une solution à 50% de ZnCl₂. On note le temps au bout duquel apparaissent des fissures ou la première casse.

Les critères d'appréciation sont les suivants.
- "Passe" = satisfaisant, correspond à un temps >= 800h
- "Casse" = mauvais, correspond à un temps <=100h

### Choc à froid de type VW -40°C (en abrégé : Choc -40°C)

Il s'agit d'un test de choc selon le protocole VW (société Volkswagen) selon la norme TL 52435. Le tube est choqué selon ce protocole de test à -40°C. On relève le pourcentage de casse.

Les critères d'appréciation sont les suivants.
- TB = très bien, si 0% de casse
- B = bien, si <25% de casse
- AB = assez bien, si entre 25 et 50% de casse
- Mv = mauvais, si > 50% de casse

### Adhésion

Il s'agit de la mesure de la force d'adhésion entre les couches, elle est exprimée en N/cm. Elle se traduit par la mesure de la force de pelage, exprimée en N/cm, et mesurée sur le tube de diamètre 8mm et d'épaisseur 1mm ayant subi un conditionnement de 15 jours à 50% d'humidité relative à 23°C.

Dans le cas d'un tube de 3 couches ou plus, la valeur donnée concerne l'interface la plus faible, c'est-à-dire celle présentant l'adhésion la moins bonne, là où il y a le plus grand risque de décollement. On effectue le pelage à l'interface en faisant subir à une des parties une traction sous un angle de 90° et à une vitesse de 50mm/min selon le procédé suivant.

On prélève par découpe une bande de tube de 9mm de large. Cette bande est donc en forme de tuile et possède toujours toutes les couches du tube original. On amorce la séparation des deux couches de l'interface que l'on souhaite évaluer à l'aide d'un couteau. On place chacune des couches ainsi séparées dans les mors d'une machine de traction. On effectue le pelage en exerçant une traction sur ces 2 couches de part et d'autre à 180° et à une vitesse de 50 mm/min. La bande, et donc l'interface, est quant à elle maintenue à 90 degrés par rapport à la direction de traction.

Les critères d'appréciation en tiennent compte et sont :
- B = bien, si > à 40 N/cm
- Acc = assez bien (acceptable), entre 40 et 20 N/cm
- Mv = médiocre à mauvais, si < 20 N/cm

### Résistance au vieillissement thermique (en abrégé : Vieillissement)

Il s'agit de la résistance du tube multicouche au vieillissement oxydatif dans l'air chaud. Le tube est mis à vieillir dans l'air à 150°C. On réalise des prélèvements réguliers au cours du temps. Les tubes ainsi prélevés sont alors choqués avec un choc selon la norme DIN 73378, ce choc étant réalisé à -40°C, on indique la demi-vie (en heure) qui correspond au temps au bout duquel 50% des tubes testés se cassent.

### Résistance au vieillissement du liquide de refroidissement (en abrégé : Vieil LLC)

Il s'agit de la résistance du tube multicouche au vieillissement lorsqu'il est rempli de liquide de refroidissement à l'intérieur, et exposé à l'air à l'extérieur. Air et liquide de refroidissement sont à 130°C. Le liquide de refroidissement est un mélange eau / glycol 50 / 50 en masse. Le tube est mis à vieillir dans ces conditions pendant 1500h. Les tubes sont alors choqués avec un choc selon la norme DIN 73378, ce choc étant réalisé à -40°C, on indique le pourcentage de tube cassé.

### Perméabilité au liquide de refroidissement (en abrégé : Barrière)

On estime la qualité de la barrière au liquide de refroidissement en mesurant la perméabilité au cours du test de vieillissement précédent. La perméabilité est la perte de liquide, elle est exprimée en g/m2/24h/mm.

### Résistance au vieillissement de solution d'urée (en abrégé : Vieillissement Urée)

Les tubes sont immergés dans une solution d'urée à 32.5% et subissent plusieurs cycles. Un cycle dure 24 heures et consiste en 23 heures et demi à 70°C et une demi-heure à 170°C. L'allongement à la rupture est le critère d'évaluation. On atteint la demi-vie lorsque l'allongement à atteint 50% de la valeur initiale. On exprime la demi-vie en heures

### 5/ Résultats

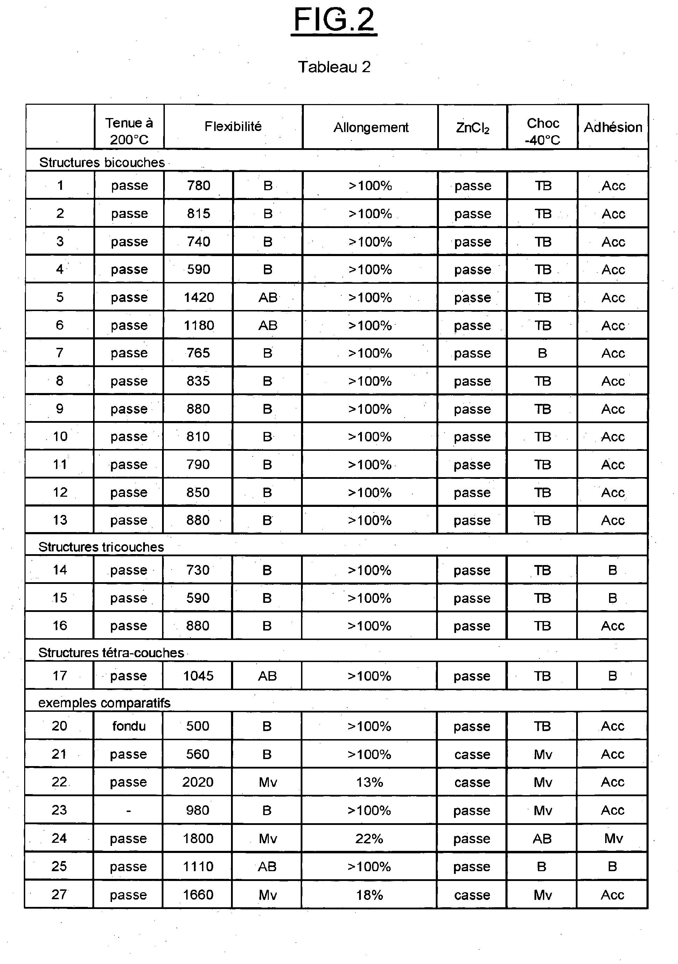

Les résultats des tests figurent dans le tableau 2 (voir figure 2) et dans les tableaux 3 et 4 ci-dessous.

Le tableau 3 ci-dessous comporte les résultats des tests évaluant le vieillissement des structures.

**Tableau 3**

| Structures | | Vieillissement (heures) | Vieillissement Urée (heures) |
|---|---|---|---|
| Selon l'invention | 1 | 2900 | >1000 |
| Comparatives | 21 | 50 | <480 |
| | 22 | 100 | <480 |
| | 23 | 330 | <480 |

Le tableau 4 ci-dessous comporte les résultats des tests comparant une structure comparative monocouche et deux structures selon l'invention.

**Tableau 4**

| Structures | | Vieillissement LLC (%) | Barrière (g/m²/24h/mm) |
|---|---|---|---|
| Selon l'invention | 1 | 30 | 130 |
| | 3 | 0 | 50 |
| Comparative | 26 | 90 | 310 |

### 5/Conclusions

Les résultats montrent que les structures selon l'invention permettent de conduire à des propriétés améliorées, en terme de tenue thermomécanique, de tenue au ZnCl₂, de flexibilité, de tenue au choc, de vieillissement et de propriétés barrière.

## Revendications

1. Structure multicouche comprenant :
- une couche (L1), dite externe, constituée d'une composition comprenant majoritairement un ou plusieurs copolyamides semi-cristallins (H) ayant une température de fusion d'au moins 220°C et comprenant au moins 80% en mol des deux motifs (s) et (a) suivants :
- le motif (s) désignant un ou plusieurs motifs semi-aromatiques (s) formés
d'un ou plusieurs sous-motifs issus de diacide aromatique (sr) et
d'un ou plusieurs sous-motifs issus de diamine aliphatique (sa), la diamine aliphatique (sa) comprenant de 9 à 13 atomes de carbone,
- le motif (a) désignant un ou plusieurs motifs aliphatiques comprenant de 8 à 13 atomes de carbone par atome d'azote,
le ratio molaire (s)/(a) allant de 1 à 3, et
- une couche (L2) constituée d'une composition comprenant majoritairement un ou plusieurs copolymères de tétrafluoroéthylène (TFE), ledit copolymère de TFE étant nécessairement fonctionnalisé lorsque la couche (L2) est en contact avec la couche (L1) ou en contact avec une couche intermédiaire comprenant majoritairement un ou plusieurs polyamides.

2. Structure selon la revendication 1, **caractérisée en ce que** le ou les copolymères de tétrafluoroéthylène sont choisis parmi le copolymère d'éthylène et de tétrafluoroéthylène (ETFE), le copolymère de tétrafluoroéthylène et de chlorotrifluoroéthylène (CTFE) et leur mélange, éventuellement fonctionnalisés par des fonctions anhydrides, époxys, acides ou encore halogénures d'acide.

3. Structure selon la revendication 1 ou 2, **caractérisée en ce que** l'enthalpie de fusion du copolyamide semi-cristallin (H), mesurée par DSC conformément à la norme ISO 11357, est supérieure ou égale à 10J/g, préférentiellement supérieure ou égale à 25J/g.

4. Structure selon l'une quelconque des revendications 1 à 3, **caractérisée en ce que** la température de fusion du copolyamide semi-cristallin (H) va de 220°C à 280°C.

5. Structure selon l'une quelconque des revendications 1 à 4, **caractérisée en ce que** le copolyamide (H) est constitué :
- de 40% à 7.5% en mol d'un ou plusieurs motifs semi-aromatiques (s),
- de 20% à 50% en mol d'un ou plusieurs motifs aliphatiques (a), et
- de 0 à 20% en mol d'un ou plusieurs motifs différents des motifs (a) et (s) précités.

6. Structure selon l'une quelconque des revendications 1 à 5, **caractérisée en ce que** le copolyamide (H) est constitué :
- de 50% à 75% en mol d'un ou plusieurs motifs semi-aromatiques (s), et
- de 25% à 50% en mol d'un ou plusieurs motifs aliphatiques (a).

7. Structure selon l'une quelconque des revendications 1 à 6, **caractérisée en ce que** le sous-motif (sr) n'est issu que de l'acide téréphtalique.

8. Structure selon la revendication 5, **caractérisée en ce que** le copolyamide (H) est choisi parmi les PA12/9.T, PA6.12/10.T, PA10.10/10.T, PA10.10/10.T/6.T, PA10.10/10.T/10.I et PA10.12/10.T.

9. Structure selon l'une quelconque des revendications 1 à 8, **caractérisée en ce que** la composition formant la couche externe (L1) comprend un ou plusieurs polymères supplémentaires choisis parmi les polyamides aliphatiques, les polyoléfines, fonctionnalisées ou non, et leurs mélanges.

10. Structure selon la revendication 9, **caractérisée en ce que** la polyoléfine est une copolyoléfine fonctionnalisée comprenant une ou plusieurs fonctions anhydrides ou acides, éventuellement en mélange avec au moins un polymère comprenant une ou plusieurs fonctions époxydes.

11. Structure selon l'une quelconque des revendications 1 à 10, **caractérisée en ce que** la composition formant la couche externe (L1) comprend jusqu'à 15% en poids d'un plastifiant par rapport au poids total de la composition.

12. Structure selon l'une quelconque des revendications 1 à 11, **caractérisée en ce qu'**elle se trouve sous la forme d'une structure bi-couche.

13. Structure selon l'une quelconque des revendications 1 à 11, **caractérisé en ce qu'**elle se trouve sous la forme d'une structure tricouche, la couche intermédiaire (L3), disposée entre les couches (L1) et (L2), la couche intermédiaire (L3) pouvant comprendre un ou plusieurs (co)polyamides aliphatiques comprenant entre 9 et 36 atomes de carbone par atome d'azote ou un ou plusieurs polyphtalamides.

14. Structure selon l'une quelconque des revendications 1 à 13, **caractérisée en ce que** la composition de la couche (L2) comprend des charges conductrices.

15. Structure selon l'une quelconque des revendications 1 à 14, **caractérisée en ce que**, lorsque la couche (L2) est constituée majoritairement d'un ou de plusieurs copolymères fluorés tels que définis dans la revendication 1 et fonctionnalisés, elle comprend une couche supplémentaire se situant en contact avec ladite couche (L2) et formant la couche la plus interne de la structure, cette couche supplémentaire pouvant comprendre un ou plusieurs copolymères fluorés tels que définis dans la revendication 1 et non fonctionnalisés et, éventuellement, des charges conductrices.

16. Tube comprenant une structure selon l'une quelconque des revendications 1 à 15.

17. Utilisation d'une structure telle que définie à l'une quelconque des revendications 1 à 15 ou d'un tube selon la revendication 16, pour le transport de fluides polaires et/ou apolaires, notamment présents dans les véhicules.

18. Utilisation selon la revendication 17, **caractérisée en ce que** le fluide est choisi parmi une huile, un liquide à base de solution d'urée, un carburant, notamment un carburant alcoolisé et particulièrement une bio-essence, un fluide réfrigérant, des émanations de gaz moteur et un liquide de refroidissement, en particulier un liquide de refroidissement à base de glycol.

## Patentansprüche

1. Mehrschichtstruktur, umfassend:
- eine als äußere Schicht bezeichnete Schicht (L1), die aus einer Zusammensetzung besteht, die hauptsächlich ein oder mehrere teilkristalline Copolyamide (H) umfasst, die eine Schmelztemperatur von mindestens 220°C aufweisen und mindestens 80 Mol-% der folgenden beiden Einheiten (s) und (a) umfassen:
- wobei die Einheit (s) für eine oder mehrere aus einer oder mehreren von einer aromatischen Disäure (sr) abgeleiteten Untereinheiten
einer oder mehreren von einem aliphatischen Diamin (sa) abgeleiteten Untereinheiten, wobei das aliphatische Diamin (sa) 9 bis 13 Kohlenstoffatome umfasst,
gebildete teilaromatische Einheiten (s) steht,
- wobei die Einheit (a) für eine oder mehrere aliphatische Einheiten mit 8 bis 13 Kohlenstoffatomen pro Stickstoffatom steht,
wobei das Molverhältnis (s)/(a) im Bereich von 1 bis 3 liegt, und
- eine Schicht (L2), die aus einer Zusammensetzung besteht, die hauptsächlich aus einem oder mehreren Copolymeren von Tetrafluorethylen (TFE) besteht, wobei das TFE-Copolymer notwendigerweise funktionalisiert ist, wenn die Schicht (L2) mit der Schicht (L1) in Kontakt steht oder mit einer Zwischenschicht, die hauptsächlich ein oder mehrere Polyamide umfasst, in Kontakt steht.

2. Struktur nach Anspruch 1, **dadurch gekennzeichnet, dass** das oder die Copolymere von Tetrafluorethylen aus Ethylen-Tetrafluorethylen-Copolymer (ETFE), Tetrafluorethylen-Chlortrifluorethylen-Copolymer (CTFE) und einer Mischung davon, die gegebenenfalls durch Anhydrid-, Epoxid-, Säure- oder auch Säurehalogenidfunktionen funktionalisiert sind, ausgewählt sind.

3. Struktur nach Anspruch 1 oder 2, **dadurch gekennzeichnet, dass** die durch DSC gemäß ISO-Norm 11357 gemessene Schmelzenthalpie des teilkristallinen Copolyamids (H) größer gleich 10 J/g und vorzugsweise größer gleich 25 J/g ist.

4. Struktur nach einem der Ansprüche 1 bis 3, **dadurch gekennzeichnet, dass** die Schmelztemperatur des teilkristallinen Copolyamids (H) 220°C bis 280°C beträgt.

5. Struktur nach einem der Ansprüche 1 bis 4, **dadurch gekennzeichnet, dass** das Copolyamid (H) aus:
- 40 bis 75 Mol-% einer oder mehrerer teilaromatischer Einheiten (s),
- 20 bis 50 Mol-% einer oder mehrerer aliphatischer Einheiten (a) und
- 0 bis 20 Mol-% einer oder mehrerer Einheiten, die von den obigen Einheiten (a) und (s) verschieden sind,
besteht.

6. Struktur nach einem der Ansprüche 1 bis 5, **dadurch gekennzeichnet, dass** das Copolyamid (H) aus:
- 50 bis 75 Mol-% einer oder mehrerer teilaromatischer Einheiten (s) und
- 25 bis 50 Mol-% einer oder mehrerer aliphatischer Einheiten (a)
besteht.

7. Struktur nach einem der Ansprüche 1 bis 6, **dadurch gekennzeichnet, dass** die Untereinheit (sr) nur von Terephthalsäure abgeleitet ist.

8. Struktur nach Anspruch 5, **dadurch gekennzeichnet, dass** das Copolyamid (H) aus PA 12/9.T, PA 6.12/10.T, PA 10.10/10.T, PA 10.10/10.T/6.T, PA 10.10/10.T/10.I und PA 10.12/10.T ausgewählt ist.

9. Struktur nach einem der Ansprüche 1 bis 8, **dadurch gekennzeichnet, dass** die die äußere Schicht (L1) bildende Zusammensetzung ein oder mehrere zusätzliche Polymere umfasst, die aus aliphatischen Polyamiden, gegebenenfalls funktionalisierten Polyolefinen und Mischungen davon ausgewählt sind.

10. Struktur nach Anspruch 9, **dadurch gekennzeichnet, dass** es sich bei dem Polyolefin um ein funktionalisiertes Copolyolefin mit einer oder mehreren Anhydrid- oder Säurefunktionen, gegebenenfalls in Abmischung mit mindestens einem Polymer mit einer oder mehreren Epoxidfunktionen, handelt.

11. Struktur nach einem der Ansprüche 1 bis 10, **dadurch gekennzeichnet, dass** die die äußere Schicht (L1) bildende Zusammensetzung bis zu 15 Gew.-% eines Weichmachers, bezogen auf das Gesamtgewicht der Zusammensetzung, umfasst.

12. Struktur nach einem der Ansprüche 1 bis 11, **dadurch gekennzeichnet, dass** sie in Form einer Zweischichtstruktur vorliegt.

13. Struktur nach einem der Ansprüche 1 bis 11, **dadurch gekennzeichnet, dass** sie in Form einer Dreischichtstruktur vorliegt, wobei die zwischen den Schichten (L1) und (L2) angeordnete Zwischenschicht (L3) ein oder mehrere aliphatische (Co)-Polyamide mit zwischen 9 und 36 Kohlenstoffatomen pro Stickstoffatom oder ein oder mehrere Polyphthalamide umfassen kann.

14. Struktur nach einem der Ansprüche 1 bis 13, **dadurch gekennzeichnet, dass** die Zusammensetzung der Schicht (L2) leitfähige Füllstoffe umfasst.

15. Struktur nach einem der Ansprüche 1 bis 14, **dadurch gekennzeichnet, dass** die Schicht (L2) dann, wenn sie hauptsächlich aus einem oder mehreren funktionalisierten Fluorcopolymeren gemäß der in Anspruch 1 angegebenen Definition besteht, eine zusätzliche Schicht umfasst, die mit der Schicht (L2) in Kontakt steht und die innerste Schicht der Struktur bildet, wobei diese zusätzliche Schicht ein oder mehrere nichtfunktionalisierte Fluorcopolymere gemäß der in Anspruch 1 angegebenen Definition und gegebenenfalls leitfähige Füllstoffe umfassen kann.

16. Rohr, umfassend eine Struktur nach einem der Ansprüche 1 bis 15.

17. Verwendung einer Struktur gemäß einem der Ansprüche 1 bis 15 oder eines Rohrs nach Anspruch 16 zum Transport von polaren und/oder unpolaren Fluiden, insbesondere von in Fahrzeugen vorliegenden Fluiden.

18. Verwendung nach Anspruch 17, **dadurch gekennzeichnet, dass** das Fluid aus einem Öl, einer Flüssigkeit auf Basis von Harnstofflösung, Kraftstoffen, insbesondere einem alkoholhaltigen Kraftstoff und insbesondere einem Biobenzin, einem Kältefluid, Motorabgasen und einer Kühlflüssigkeit, insbesondere einer Kühlflüssigkeit auf Basis von Glykol, ausgewählt ist.

## Claims

1. A multilayer structure comprising:
- a layer (L1) - outer layer - composed of a composition comprising predominantly one or more semicrystalline copolyamides (H) having a melting temperature of at least 220°C and comprising at least 80 mol% of the two following units (s) and (a):
- where unit (s) denotes one or more semi-aromatic units (s) formed
of one or more subunits obtained from aromatic diacid (sr) and
of one or more subunits obtained from aliphatic diamine (sa), the aliphatic diamine (sa) comprising from 9 to 13 carbon atoms,
- where the unit (a) denotes one or more aliphatic units comprising 8 to 13 carbon atoms per nitrogen atom, and
where the molar ratio (s)/(a) is from 1 to 3, and
- a layer (L2) composed of a composition comprising predominantly one or more tetrafluoroethylene (TFE) copolymers, said TFE copolymer being mandatorily functionalized when the layer (L2) is in contact with the layer (L1) or in contact with an interlayer comprising predominantly one or more polyamides.

2. The structure as claimed in claim 1, **characterized in that** the tetrafluoroethylene copolymer or copolymers are selected from ethylene-tetrafluoroethylene copolymer (ETFE), tetrafluoroethylenechlorotrifluoroethylene copolymer (CTFE), and a mixture thereof, which are optionally functionalized by anhydride, epoxy, acid or else acid halide functions.

3. The structure as claimed in claim 1 or 2, **characterized in that** the melting enthalpy of the semicrystalline copolyamide (H), as measured by DSC in accordance with the standard ISO 11357, is greater than or equal to 10 J/g, preferably greater than or equal to 25 J/g.

4. The structure as claimed in any one of claims 1 to 3, **characterized in that** the melting temperature of the semicrystalline copolyamide (H) is from 220°C to 280°C.

5. The structure as claimed in any one of claims 1 to 4, **characterized in that** the copolyamide (H) is composed:
- of 40 mol% to 75 mol% of one or more semi-aromatic units (s),
- of 20 mol% to 50 mol% of one or more aliphatic units (a), and
- of 0 to 20 mol% of one or more units other than the aforesaid units (a) and (s).

6. The structure as claimed in any one of claims 1 to 5, **characterized in that** the copolyamide (H) is composed:
- of 50 mol% to 75 mol% of one or more semi-aromatic units (s), and
- of 25 mol% to 50 mol% of one or more aliphatic units (a).

7. The structure as claimed in any one of claims 1 to 6, **characterized in that** the subunit (sr) is obtained only from terephthalic acid.

8. The structure as claimed in claim 5, **characterized in that** the copolyamide (H) is selected from PA12/9.T, PA6.12/10.T, PA10.10/10.T, PA10.10/10.T/6.T, PA10.10/10.T/10.I, and PA10.12/10.T.

9. The structure as claimed in any one of claims 1 to 8, **characterized in that** the composition forming the outer layer (L1) comprises one or more supplementary polymers selected from functionalized or non-functionalized polyolefins, aliphatic polyamides, and mixtures thereof.

10. The structure as claimed in claim 9, **characterized in that** the polyolefin is a functionalized copolyolefin comprising one or more anhydride or acid functions, optionally in a mixture with at least one polymer comprising one or more epoxide functions.

11. The structure as claimed in any one of claims 1 to 10, **characterized in that** the composition forming the outer layer (L1) comprises up to 15 wt% of a plasticizer, relative to the total weight of the composition.

12. The structure as claimed in any one of claims 1 to 11, **characterized in that** it takes the form of a two-layer structure.

13. The structure as claimed in any one of claims 1 to 11, **characterized in that** it takes the form of a three-layer structure, the interlayer (L3), arranged between the layers (L1) and (L2), it being possible for the interlayer (L3) to comprise one or more aliphatic (co)polyamides comprising between 9 and 36 carbon atoms per nitrogen atom or one or more polyphthalamides.

14. The structure as claimed in any one of claims 1 to 13, **characterized in that** the composition of the layer (L2) comprises conductive fillers.

15. The structure as claimed in any one of claims 1 to 14, **characterized in that** when the layer (L2) is composed predominantly of one or of two or more functionalized fluorocopolymers as defined in claim 1, it comprises a supplementary layer located in contact with said layer (L2) and forming the innermost layer of the structure, it being possible for this supplementary layer to comprise one or more non-functionalized fluorocopolymers as defined in claim 1 and, optionally, conductive fillers.

16. A pipe comprising a structure as claimed in any one of claims 1 to 15.

17. The use of a structure as defined in any one of claims 1 to 15 or of a pipe as claimed in claim 16 for transporting polar and/or apolar fluids, especially those present in vehicles.

18. The use as claimed in claim 17, **characterized in that** the fluid is selected from an oil, a liquid based on urea solution, a fuel, especially an alcoholized fuel and more particularly a biogasoline, a refrigerant fluid, engine gas emanations, and a cooling liquid, more particularly a glycol-based cooling liquid.
